# DEMANDE DE BREVET EUROPEEN

(11) **EP 1 548 422 A1**
(43) Date de publication de la demande: **29.06.2005**
(21) Numéro de dépôt: 04106951.9
(22) Date de dépôt: 23.12.2004
(51) Int. Cl.: G01N 21/39

(54) **Procédé et dispositif de mésure d'absorption ou de diffusion lumineuse d'élements biologiques**

(30) Priorité: 26.12.2003 FR 0351212
(71) Demandeur: COMMISSARIAT A L'ENERGIE ATOMIQUE, 75752 Paris Cédex 15 (FR)
(72) Inventeur: Trebbia, Jean-Baptiste, 91190, Gif sur Yvette (FR); Chaton, Patrick, 38570, Theys (FR); Getin, Stéphane, 38100, Grenoble (FR); Grosse, Philippe, 38360, Sassenage (FR)
(74) Mandataire: Poulin, Gérard

(57) **Abrégé**

La présente invention propose un procédé ainsi qu'un dispositif permettant notamment de mesurer l'absorption ou la diffusion lumineuse d'échantillons biologiques.

Le dispositif comprend des premiers moyens réflecteurs (207) et des seconds moyens réflecteurs (209) de rayons lumineux, lesdits premiers ou/et seconds moyens réflecteurs étant dotés d'au moins deux miroirs ou d'une matrice de miroirs (208) intégrés à un même support et les premiers et seconds moyens réflecteurs formant un système de plusieurs cavités résonnantes. Un support (200) tel qu'une biopuce comprenant plusieurs échantillons biologiques (204) est placé entre lesdits premiers et seconds moyens réflecteurs. Au moins une impulsion lumineuse est émise dans lesdites cavités résonnantes et des signaux lumineux de réponse sortant du système de cavités sont mesurés, lesdits signaux lumineux permettant de déterminer l'absorption lumineuse desdits échantillons.

## Description

### DOMAINE TECHNIQUE ET ART ANTERIEUR

La présente invention concerne un dispositif amélioré permettant de mesurer l'absorption ou/et la diffusion lumineuse d'objets ainsi qu'un procédé permettant de mesurer l'absorption ou/et la diffusion lumineuse d'éléments biologiques.

Pour effectuer des mesures d'absorption lumineuse d'éléments biologiques, une méthode connue est la mesure par déflexion photo-thermique. Cette méthode est présentée dans le document [1] référencé à la fin de la présente description.

Elle consiste à irradier un objet dont on souhaite mesurer l'absorption, à l'aide d'un faisceau dit « de pompe ». Une partie de l'énergie du faisceau « de pompe » est alors absorbée par ledit objet et provoque un gradient d'indice dans le ou les milieux l'entourant. Un autre faisceau lumineux, dit faisceau « sonde » traversant ce gradient d'indice subit alors une déviation. Une mesure de la déviation du faisceau « sonde », peut permettre de quantifier ledit gradient d'indice. Cette mesure permet alors de déduire l'absorption lumineuse dudit objet.

Cette méthode est cependant limitée. Elle peut s'avérer insuffisamment précise pour certaines applications nécessitant une très grande sensibilité de détection, telle que par exemple la mesure d'hybridation de brins d'ADN.

Une autre méthode, dite de « résonance par plasmon de surface », peut être utilisée pour effectuer la mesure d'absorption lumineuse d'échantillons biologiques. Cette méthode, est présentée dans le document [2], référencé à la fin de la présente description.

Cette méthode de « résonance par plasmon de surface » présente notamment pour inconvénient de nécessiter des réglages, que l'on renouvelle pour chaque échantillon biologique mesuré.

Pour certaines applications nécessitant la mesure d'un très grand nombre d'échantillons, comme par exemple, la mesure d'hybridation de brins d'ADN sur une biopuce, cette méthode peut s'avérer très longue à mettre en oeuvre.

Il se pose le problème de pouvoir réaliser des mesures fines d'échantillons d'éléments biologiques et plus rapides que les méthodes suivant l'art l'antérieur.

### EXPOSÉ DE L'INVENTION

La présente invention propose un procédé de mesure d'absorption ou de diffusion lumineuse d'échantillons biologiques comprenant les étapes de :
a) placement d'au moins un échantillon cible dans au moins une cavité résonante ou dans au moins une cavité résonante d'un système de plusieurs cavités.
b) émission d'au moins une impulsion lumineuse dans ladite cavité.
c) mesure d'au moins un signal lumineux de réponse sortant de la cavité en réponse à ladite impulsion lumineuse, la mesure dudit signal lumineux permettant de déterminer l'absorption lumineuse dudit échantillon.

Par échantillons biologiques on entend des éléments biologiques tel que par exemple des cellules animales ou végétales, des microorganismes, des bactéries, des macromolécules tel que de l'ADN ou de l'ARN.

Le procédé suivant l'invention permet d'obtenir des mesures d'une plus grande sensibilité qu'avec les techniques nécessitant d'exposer des échantillons biologiques à mesurer sous un faisceau continu.

La cavité peut être formée par exemple par de miroirs disposés en vis-à-vis. Quant à l'impulsion ou les impulsions lumineuses émises dans la cavité, celles-ci peuvent provenir par exemple d'un laser pulsé ou d'une matrice de lasers pulsés. Le ou les signaux de réponse en sortie de cavité peuvent être mesurés à l'aide d'un dispositif comportant par exemple un ou plusieurs photodétecteurs, par exemple sous forme de photodiodes ou de phototransistors. Une mesure, par exemple du temps de décroissance du signal ou des signaux de réponse peut permettre de déterminer l'absorption des échantillons.

Selon une variante de l'invention, la cavité peut être remplacée par un système de plusieurs cavités. Cette variante peut permettre d'effectuer rapidement la mesure de plusieurs échantillons.

Un tel système de plusieurs cavités peut être formé par exemple par au moins une première matrice de miroirs concaves associée à un miroir plan ou une deuxième matrice de miroirs concaves. Les miroirs de la première matrice ou/et de la deuxième matrice peuvent être intégrés à un même support.

Pour effectuer la mesure de plusieurs échantillons l'invention prévoit une variante de procédé comprenant les étapes de :
a) placement d'au moins deux échantillons cibles parmi les échantillons biologiques chacun dans une cavité cible du système de plusieurs cavités,
b) émission d'au moins une impulsion lumineuse dans chacune desdites cavités cibles.
c) mesure d'au moins deux signaux lumineux de réponse sortant des cavités cibles en réponse aux impulsions lumineuses, les mesures desdits signaux lumineux permettant de déterminer l'absorption lumineuse desdits au moins deux échantillons.

Cette variante peut permettre d'effectuer la mesure de plusieurs échantillons en parallèle, de manière à obtenir une « image » de l'absorption lumineuse d'un groupe de plusieurs échantillons.

Selon une variante de procédé, lesdites impulsions peuvent être émises simultanément, à l'étape b), à l'aide par exemple de plusieurs lasers pulsés ou d'une matrice de lasers pulsés.

A l'étape c), les signaux de réponse peuvent être alors mesurés simultanément ou successivement, par exemple à l'aide de plusieurs détecteurs ou d'une matrice de détecteurs, par exemple une matrice de photodiodes.

Selon une variante de dispositif, la source émettrice d'impulsions lumineuses, par exemple un laser pulsé, peut être associée à un dispositif ou des moyens permettant de défléchir des rayons lumineux.

Les impulsions lumineuses émises dans une cavité ou dans un système de plusieurs cavités, peuvent alors être adressées vers n'importe quel échantillon d'un groupe d'échantillons, sans avoir à déplacer la source émettrice d'impulsions.

Le procédé suivant l'invention peut en outre permettre d'effectuer la mesure d'un ou de plusieurs échantillons biologiques de taille très faible. Les échantillons peuvent être par exemple disposés sur une biopuce placée à l'intérieur de la cavité ou dudit système de plusieurs cavités.

Un système de plusieurs microcavités par exemple agencées selon une matrice peut également être mis en oeuvre pour effectuer la mesure d'échantillons de faibles tailles. Ce système peut être utilisé par exemple pour mesurer des échantillons d'ADN ou d'ARN greffés sur des plots d'une biopuce. Un tel système de microcavités peut être réalisé par exemple à l'aide d'un procédé de réalisation en couches minces.

La cavité ou le système de plusieurs cavités sont formés par des premiers moyens réflecteurs ou un premier dispositif réflecteur et des seconds moyens réflecteurs ou un deuxième dispositif réflecteur. Selon une variante du procédé suivant l'invention, les échantillons biologiques, par exemple de l'ADN ou de l'ARN, peuvent être greffés ou intégrés ou accolés auxdits premiers moyens réflecteurs ou auxdits seconds moyens réflecteurs préalablement à l'étape a). Dans le cas par exemple d'échantillons greffés, il est possible d'effectuer une mesure d'étalonnage sur les moyens réflecteurs préalablement à l'étape de greffage des échantillons.

Cette variante de procédé peut permettre d'éviter d'utiliser un support pour les échantillons. Une mesure, dans laquelle seule l'absorption ou la diffusion lumineuse des échantillons est prise en compte peut être alors effectuée.

L'invention concerne également un dispositif de mesure d'absorption lumineuse d'objets comprenant : des premiers moyens et des seconds moyens réflecteurs de rayons lumineux, les premiers et seconds moyens réflecteurs étant aptes à former un système de plusieurs cavités résonantes.

Afin de former un système de plusieurs cavités, les premiers ou/et seconds moyens réflecteurs peuvent comprendre au moins deux miroirs ou une matrice de miroirs. Lesdits au moins deux miroirs, ou lesdites miroirs de la matrice de miroirs peuvent être intégrés à un même support.

Selon une variante de ce système de plusieurs cavités, les premiers moyens réflecteurs peuvent comprendre une première matrice de miroirs concaves, les seconds moyens réflecteurs peuvent alors comprendre un miroir plan ou une seconde matrice de miroirs concaves.

Un dispositif émetteur d'impulsions lumineuses dans les cavités dudit système, peut être également prévu.

Ce dispositif émetteur peut comprendre par exemple un ou plusieurs lasers pulsés, ou une matrice de lasers pulsés. Le dispositif suivant l'invention peut éventuellement comprendre en outre, un dispositif de couplage ou des moyens pour coupler ledit dispositif émetteur et au moins une cavité du système de plusieurs cavités. Ces moyens de couplage peuvent comprendre par exemple un ou plusieurs guides d'ondes, ou au moins une lentille, ou au moins une matrice de lentilles.

Selon une variante du dispositif suivant l'invention, un dispositif de déflexion ou des moyens de déflexion de rayons lumineux peuvent être associés au dispositif émetteur d'impulsions lumineuses par exemple afin de diriger des impulsions vers n'importe quelle cavité du système multi-cavités.

Pour effectuer la mesure de signaux en sortie d'une ou plusieurs cavités du système multi-cavités, le dispositif suivant l'invention peut comprendre en outre un dispositif de détection, comportant au moins un photodétecteur choisi selon la longueur d'onde desdits signaux, par exemple une photodiode ou un phototransistor ou une matrice de photodiodes ou une matrice de phototransistors.

Le dispositif suivant l'invention peut comprendre un autre dispositif de couplage ou d'autres moyens, en sortie de cavité ou du système multi-cavités, pour coupler ledit dispositif de détection et au moins une cavité du système de plusieurs cavités. Ces autres moyens de couplage peuvent prendre comporter par exemple un ou plusieurs guides d'ondes, ou au moins une lentille, ou au moins une matrice de lentilles.

Des moyens pour focaliser les rayons lumineux provenant d'une ou plusieurs cavités du système de plusieurs cavités sur le dispositif de détection peuvent être prévus.

Les objets ou éléments mesurés à l'aide du dispositif suivant l'invention peuvent être par exemple des échantillons biologiques, par exemple de l'ADN ou de l'ARN, ou des cellules.

L'invention concerne également un dispositif comprenant en outre un support doté d'échantillons, placé entre les premiers moyens réflecteurs et les seconds moyens réflecteurs formant la cavité ou le système de plusieurs cavités.

Elle concerne également un dispositif dans lequel les échantillons sont des d'échantillons d'éléments biologiques greffés ou intégrés sur les premiers moyens réflecteurs ou sur les seconds moyens réflecteurs d'une cavité ou d'un système multi-cavités

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 illustre un exemple de mise en oeuvre du procédé suivant l'invention,
- les figures 2A, 2B illustrent des courbes respectivement d'une impulsion lumineuse émise à l'entrée d'une cavité optique résonante et d'un signal en sortie de la cavité, en réponse à la dite impulsion,
- les figures 3A, 3B, 3C, 3D, 3E illustrent des exemples de dispositifs comprenant un système de plusieurs cavités suivant l'invention,
- les figures 4A, 4B, 4C, illustrent des exemples de mises en oeuvre de procédés suivant l'invention,
- les figures 5A-5C, illustrent un exemple de procédé permettant de réaliser une matrice de miroirs,
- la figure 6 illustre un exemple de masque à transmission variable,

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

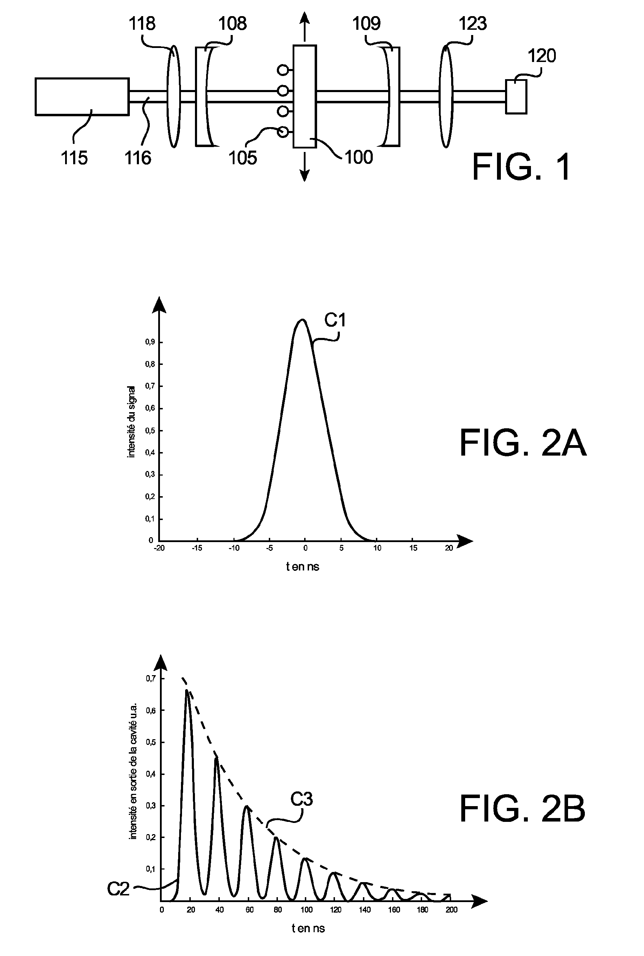

Un exemple de dispositif mis en oeuvre selon la présente invention va à présent être décrit en liaison avec la figure 1. Ce dispositif comprend tout d'abord, des premiers moyens réflecteurs 108 par exemple formés d'un ou plusieurs miroirs plans ou/et concaves, et des seconds moyens réflecteurs 109, par exemple formés d'un ou plusieurs miroirs plans ou/et concaves.

Ces premiers et seconds moyens réflecteurs 108 et 109 sont parallèles et disposés en vis-à-vis. Ils forment au moins une cavité optique résonnante de type Fabry-Pérot autour desdits échantillons 105. Cette cavité peut avoir une longueur comprise par exemple entre quelques centimètres et quelques mètres, par exemple de 10 cm.

Un dispositif permet d'envoyer des impulsions lumineuses 116 dans la cavité. Il comprend une source émettrice 115 par exemple un laser pulsé, permettant d'envoyer des impulsions lumineuses brèves, d'une durée par exemple comprise entre 100 picosecondes et plusieurs dizaines de nanosecondes ou 100 nanosecondes, à une fréquence, par exemple comprise entre quelques kHz et quelques centaines de kHz et dans un domaine de longueur d'onde qui peut aller de l'ultraviolet à l'infrarouge.

La courbe C₁ sur la figure 2A illustre un exemple de signal envoyé par la source émettrice 115 à l'entrée de la cavité.

Lorsqu'une impulsion lumineuse est émise à l'entrée de la cavité, elle se propage à l'intérieur puis se réfléchit un certain nombre de fois tour à tour sur les seconds moyens réflecteurs 109 puis sur les premiers moyens réflecteurs 108. Une faible partie de l'énergie de l'impulsion s'échappe de la cavité après chaque aller-retour.

En prévoyant un dispositif de détection 120, en sortie de la cavité, il est possible de collecter l'énergie lumineuse transmise en sortie de cette dernière. Pour un signal lumineux émis à l'entrée de la cavité sous forme d'une impulsion, on obtient, à l'aide du dispositif de détection 120, un signal de réponse, en sortie de la cavité, sous forme d'un train d'impulsions.

Un support 100 doté d'objets dont on souhaite mesurer l'absorption ou/et la diffusion lumineuse est placé dans la cavité. Ces objets sont par exemple des échantillons 105 d'éléments biologiques, tels que des cellules animales ou végétales, des microorganismes, des macromolécules tels que de l'ADN, de l'ARN.

Le signal de réponse, en sortie de la cavité, a alors une enveloppe, témoin des pertes induites par la cavité et des pertes induites par le support 100 doté des échantillons 105. Cette enveloppe est généralement exponentiellement décroissante au cours du temps.

Un exemple de signal en sortie de cavité et en réponse à celui illustré par la courbe C₁ sur la figure 2A, est représenté par la courbe C₂ de la figure 2B. Il a la forme d'une succession d'impulsions d'amplitudes de plus en plus faibles. L'enveloppe de ce signal de réponse est modélisée par la courbe C₃ en pointillés prenant la forme d'une exponentielle décroissante.

Suite à l'émission d'une impulsion lumineuse à l'entrée d'une cavité, une mesure du temps de décroissance du signal de réponse en sortie de la cavité, peut permettre de connaître les pertes induites par cette dernière. La présence d'un objet, tel que le support 100, à l'intérieur de la cavité engendre des pertes supplémentaires d'énergie par rapport à une cavité vide, et modifie la valeur dudit temps de décroissance.

De même, la présence d'échantillons 105 d'éléments biologiques sur le support 100 à l'intérieur de la cavité engendre des pertes supplémentaires d'énergie par rapport à une cavité comprenant ce même support 100 sans les échantillons.

Pour mesurer l'absorption des échantillons d'éléments biologiques, on peut tout d'abord effectuer une mesure du temps de décroissance d'un signal de réponse en sortie de la cavité lorsque cette dernière comprend le support 100 sans les échantillons 105. On compare alors cette mesure avec une autre mesure du temps de décroissance d'un signal de réponse en sortie de la cavité, lorsque cette dernière comprend le support 100 doté en outre des échantillons.

Pour effectuer ces mesures, les impulsions envoyées dans la cavité ont une largeur temporelle fonction, notamment, de la longueur de la cavité. De préférence, cette largeur temporelle n'excédera pas une valeur seuil afin d'éviter le recouvrement spatial de deux impulsions successives en sortie de la cavité. Par exemple, pour une cavité de 10 cm de long, la largeur temporelle des impulsions lumineuses envoyées sera de préférence inférieure à 666 picosecondes. Selon un autre exemple, pour une cavité de 1 mètre de long, la largeur temporelle des impulsions lumineuses envoyées sera de préférence inférieure à 6,6 nanosecondes.

Quant à la puissance instantanée des impulsions émises, celle-ci peut être comprise par exemple entre une dizaine de kilowatts et plusieurs centaines de kilowatts, par exemple de l'ordre 166 kW.

Le temps de décroissance d'un signal de réponse, en sortie de la cavité, comme celui illustré sur la figure 2B, est dépendant notamment de la longueur de la cavité et de la réflectivité des moyens réflecteurs 108 et 109. Par exemple, pour une cavité de 10 cm de long et des moyens réflecteurs ayant un coefficient de réflectivité de 99,8 %, ce temps de décroissance peut être de l'ordre de la centaine de nanosecondes, par exemple égal à 166 ns. Ainsi, la longueur de la cavité est choisie de manière à ce que ledit temps de décroissance du signal de sortie reste mesurable.

Au moment où le signal de réponse en sortie de la cavité est reçu par le dispositif de détection, il peut avoir une amplitude décroissante, ayant un maximum de l'ordre par exemple d'une ou plusieurs centaines de milliwatts, par exemple de l'ordre de 6,66 mW pour des moyens réflecteurs formant la cavité ayant chacun une réflectivité de 99,8 % et pour une puissance d'impulsion émise à l'entrée de la cavité de l'ordre de 166 kW.

L'atténuation du dispositif de détection peut être par exemple de l'ordre de 20 dB. Ce dernier peut comprendre un ou plusieurs détecteurs par exemple une ou plusieurs photodiodes, permettant de faire l'acquisition de signaux de réponse lumineux en sortie de la cavité et de transformer ces signaux lumineux de réponse en signaux électriques. La conversion photon-courant de ces détecteurs peut être par exemple de l'ordre de quelques centaines de milliampères par watts, par exemple de l'ordre de 0,3 A/W.

Le signal de réponse, mesuré en sortie de la cavité, converti en courant par ces photodiodes et atténué, peut avoir une amplitude maximum par exemple d'une ou plusieurs centaines de microampères. Cette amplitude peut être par exemple de 222 microampères pour un signal à l'entrée du dispositif de détection de l'ordre de 6,66 mW et une atténuation de l'ordre de 20 dB.

Le dispositif précédemment décrit et illustré sur la figure 1 peut également être équipé de moyens de couplage optiques 118, par exemple sous forme d'une ou plusieurs lentilles situées entre la source émettrice 115 et la cavité. Ces moyens de couplage 118 peuvent permettrent d'ajuster les impulsions lumineuses provenant de la source 115 par rapport à l'axe optique de la cavité.

D'autre part, suivant les caractéristiques de la source 115, par exemple suivant le diamètre et la divergence du faisceau laser, les moyens de couplage 118 peuvent permettre de coupler la source 115 avec le mode propre de la cavité.

D'autres moyens de couplage 123, peuvent également être prévus afin de collecter le rayonnement lumineux en sortie de la cavité 110 et permettre de focaliser ce rayonnement sur le dispositif de détection 120. Ces autres moyens de couplage 123 peuvent par exemple prendre la forme d'une ou plusieurs lentilles situées entre la cavité et le dispositif détecteur 120.

Selon une variante du procédé, le support 100 peut être déplacé vis-à-vis des moyens réflecteurs 108 et 109, après chaque mesure. Cela peut permettre de placer tour à tour chacun des échantillons 105 dans la cavité résonante, sans nécessairement avoir à déplacer les moyens de couplage 118 ou la source émettrice 115 d'impulsions lumineuses. Des moyens de déplacement du support 100, par exemple automatisés, peuvent être prévus. Ces moyens de déplacement peuvent comprendre par exemple un moteur pas à pas ainsi que des platines de translation.

Selon une variante de l'invention, un système de plusieurs cavités résonantes que l'on appellera « système multi-cavités » peut être utilisé à la place d'une cavité unique. Ce système peut permettre une mesure rapide d'absorption lumineuse de plusieurs échantillons biologiques, notamment sans nécessairement devoir déplacer le support des échantillons à mesurer.

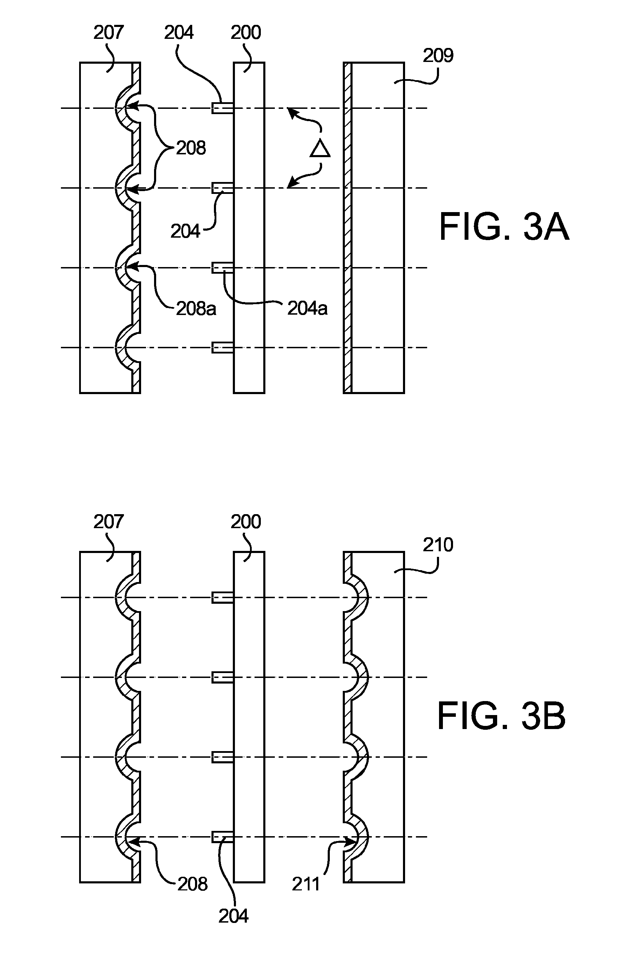

La figure 3A illustre un exemple de dispositif comportant un système multi-cavités.

Ce dispositif comprend tout d'abord une matrice 207 de miroirs concaves 208 et un miroir plan 209, la matrice 207 et le miroir plan 209 étant en vis-à-vis l'un de l'autre et parallèles. Chaque miroir de la matrice 207 associé à une portion du miroir plan 209, forme une cavité résonante d'axe optique Δ (représenté par des lignes pointillées) sur lequel des échantillons peuvent être centrés.

Une biopuce 200 (biochip selon la terminologie anglo-saxonne) dotée d'échantillons biologiques, dont on souhaite mesurer l'absorption lumineuse, est placée dans le système. Les échantillons biologiques, sont par exemple des brins d'ADN ou d'ARN greffés sur des plots 204.

Pour effectuer une mesure d'absorption d'un échantillon particulier placé sur un plot particulier 204a compris dans une cavité particulière du système multi-cavités, on peut conserver le principe de la méthode décrite auparavant. On émet une série d'impulsions lumineuses, par exemple à l'aide d'un faisceau laser, sur la face arrière d'un miroir concave particulier 208a de la matrice 207.

On mesure alors un signal de réponse à ces impulsions en sortie de cette cavité particulière. Pour effectuer la mesure d'un autre échantillon, on peut alors déplacer le faisceau laser à l'entrée d'une autre cavité comprenant cet autre échantillon.

Les miroirs 208 de la matrice peuvent avoir un diamètre compris par exemple entre 100 micromètres et quelques millimètres, par exemple de l'ordre de 1 mm ou 2 mm.

La taille ou le diamètre des miroirs 208 de la matrice 207 aura de préférence une valeur supérieure au diamètre dudit faisceau laser envoyé à l'entrée du système multi-cavités. Dans le cas contraire, des phénomènes de diffraction indésirables sur les miroirs peuvent apparaître. Cela peut également entraîner des pertes susceptibles de fausser les mesures effectuées.

Afin que ces pertes soient inférieures à 100 ppm, les miroirs auront de préférence un rayon d'au moins 2,74 fois supérieur au diamètre dudit faisceau sur le miroir.

Afin que ces pertes soient inférieures à 10 ppm, les miroirs auront de préférence un rayon d'au moins 3,19 fois supérieur à celui dudit faisceau sur le miroir.

Afin que ces pertes soient inférieures à 1 ppm, les miroirs auront de préférence un rayon d'au moins 3,45 fois supérieur au diamètre dudit faisceau sur le miroir.

La taille ainsi que le rayon de courbure des miroirs 208 de la matrice 207 peuvent être également adaptés à la taille des échantillons.

Par exemple dans le cas d'une cavité de longueur 10 cm, et d'échantillons biologiques disposés sur des plots de 100 micromètres, la taille des miroirs peut être par exemple de 1 mm.

La figure 3B illustre un autre exemple de système multi-cavités différent de celui décrit précédemment. Il comporte une première matrice 207 de miroirs concaves 208 et une seconde matrice 210 de miroirs concaves 211, les deux matrices étant en vis-à-vis l'une de l'autre et parallèles entre elles.

Chaque miroir 208 de la première matrice 207 a un axe principal en commun avec un miroir 211 de la seconde matrice 210. Chaque miroir de la première matrice 207 associé à un miroir 211 de la seconde matrice 210 forme une cavité résonante d'axe optique Δ (représenté par des lignes pointillées) sur lequel des échantillons d'une biopuce 200 peuvent être centrés.

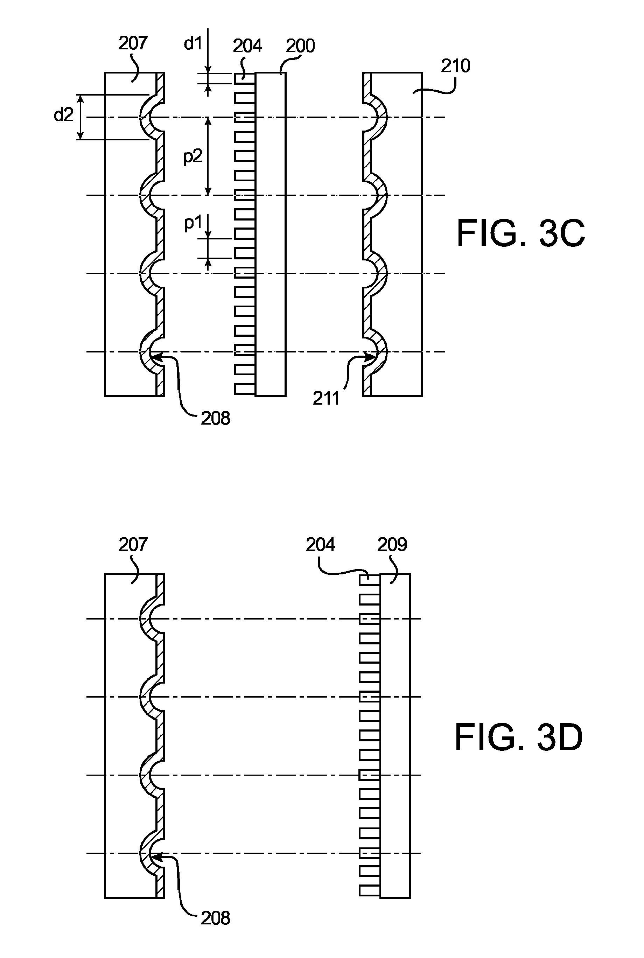

Avec un système multi-cavités, par exemple celui précédemment décrit, dans le cas où les échantillons sont disposés par exemple sur un ensemble de plots 204 de diamètre d₁ et espacés d'un pas p₁ inférieurs voire très inférieurs respectivement au diamètre d₂ des miroirs 208 et à un pas p₂ de la matrice 207 de miroirs 208, il peut se poser un problème de résolution spatiale insuffisante (figure 3C). Seulement certains des plots 204 sont placés sur l'axe optique d'une cavité et tous les échantillons ne peuvent être mesurés.

Pour résoudre ce problème, le support 200 peut être déplacé dans un plan perpendiculaire aux axes optiques des cavités du système multi-cavités (le déplacement étant indiqué sur la figure 3C par des flèches), pour permettre de placer tour à tour chaque échantillon sur un axe optique Δ d'une des cavités du système multi-cavités.

Des moyens permettant de déplacer le support 200 des échantillons peuvent être prévus à cet effet. Ces moyens peuvent comprendre par exemple un moteur pas à pas munis de platines de translation.

Selon une variante, les échantillons peuvent être intégrés ou rattachés directement à un des moyens réflecteurs du système multi-cavités, sans faire appel à un support.

Un premier exemple de mise en oeuvre d'une telle variante est illustré sur la figure 3D. Dans cet exemple, les échantillons à mesurer sont greffés sur des plots 204 intégrés à un miroir plan 209. Les plots sont disposés sur la surface réfléchissante du miroir plan 209. De manière à former un système multi-cavités, le miroir plan 209 est placé en vis-à-vis d'une matrice 207 de miroirs concaves 208.

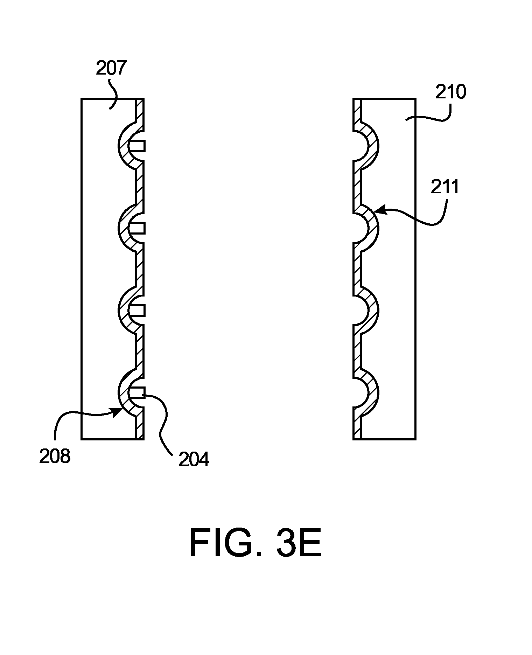

Un second exemple de mise en oeuvre d'une telle variante est illustré sur la figure 3E. Dans cet exemple, les échantillons sont placés sur des plots 204 intégrés à une matrice 207 de miroirs 208 concaves. Les plots 204 sont disposés sur la surface réfléchissante desdits miroirs concaves. Pour former un système multi-cavités, la matrice 207 est placée en vis-à-vis d'une autre matrice 210 de miroirs concaves 211.

Le dispositif mis en oeuvre suivant l'invention n'est pas limité à l'utilisation de matrices de miroirs concaves pour former ledit système multi-cavités. Ce dernier peut être réalisé par exemple à l'aide de matrices de miroirs plans. Cependant, le réglage d'un tel système peut s'avérer alors plus délicat qu'avec des matrices de miroirs concaves.

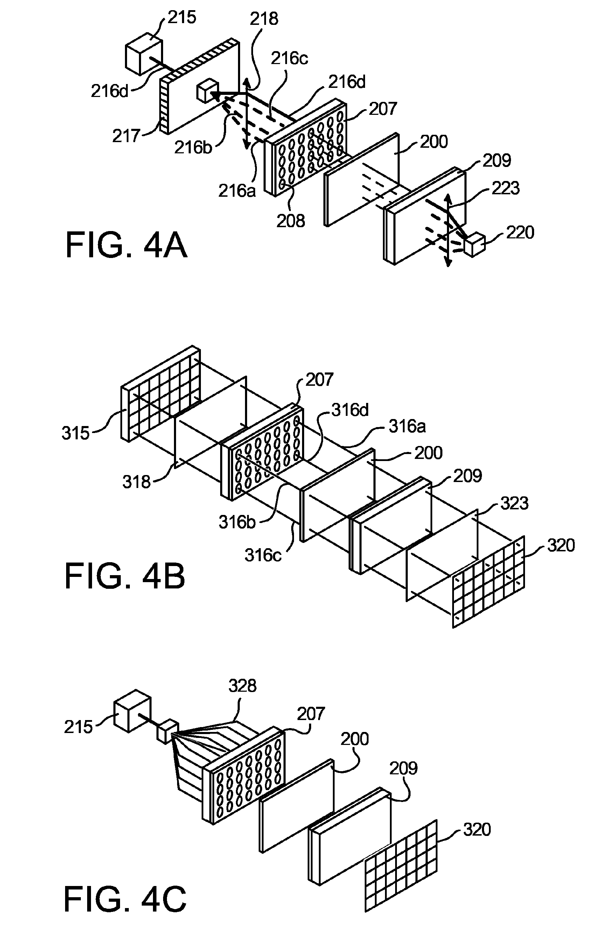

Pour mettre en oeuvre une mesure d'absorption à l'aide d'un système multi-cavités, il se pose également le problème de pouvoir adresser des impulsions lumineuses à une haute cadence vers n'importe quelle cavité cible dudit système. Un dispositif émetteur d'impulsions lumineuses permettant d'effectuer cette tâche est prévu dans le cadre de l'invention et illustré sur la figure 4A.

Ce dispositif émetteur peut comprendre par exemple un laser pulsé 215, émettant à une puissance par exemple comprise entre quelques dizaines de kilowatts et quelques centaines de kilowatts, par exemple 166 kW, associé à des moyens 217 permettant de défléchir des impulsions lumineuses émises par le laser 215.

Ces moyens de déflexion 217 permettent d'envoyer successivement et de manière rapide, des impulsions lumineuses 216a, 216b, 216c, 216d vers plusieurs cavités différentes d'un système multi-cavités formé par exemple par une matrice 207 de micro-miroirs 208 et un miroir plan 209. Les moyens de déflexion 217 peuvent prendre la forme, par exemple, de composants acousto-optiques fonctionnant en régime de Bragg. Ces composants permettent de défléchir, respectivement dans une direction horizontale et dans une direction verticale, les impulsions émises par le laser 215.

Chacun des composants acousto-optiques peut être piloté par exemple par un générateur basse fréquence permettant de moduler l'intensité des impulsions lumineuses à l'aide d'ondes radiofréquences d'amplitude variable. La fréquence de ces ondes, permet de contrôler la déflexion du faisceau lumineux.

On peut envisager d'autres moyens de déflexion, par exemple sous forme de micro-miroirs. Cependant, les moyens de déflexions précédemment décrits ont pour avantage, notamment, d'être stables et simples à mettre en oeuvre, et de permettre d'effectuer des mesures rapides.

Pour faire l'acquisition de signaux en sortie du système multi-cavités, un détecteur 220 tel qu'un photodétecteur rapide, par exemple une photodiode rapide, peut être prévu.

Des moyens de couplage 218, par exemple sous forme d'une ou plusieurs lentilles associées ou d'une matrice de lentilles en entrée du système multi-cavités peuvent permettrent de diriger des signaux lumineux vers les différentes cavités du système multi-cavités.

D'autres moyens de couplage 223, par exemple sous forme d'une ou plusieurs lentilles convergentes associées en sortie du système multi-cavités peuvent permettrent de diriger des signaux lumineux issus de cavités différentes du système multi-cavités vers le même détecteur 220.

Une variante du dispositif décrit ci-dessus est prévue, pour pouvoir effectuer plusieurs mesures d'absorption simultanément sur plusieurs échantillons différents.

Dans cette variante, le détecteur 220, en sortie du système multi-cavités est remplacé par plusieurs détecteurs agencés selon une matrice de détecteurs 320, par exemple une matrice de photodiodes.

Cette matrice de détecteurs 320, peut permettre d'acquérir plusieurs mesures en parallèle et obtenir ainsi une image des mesures d'absorption des échantillons du support.

Pour effectuer ces mesures en parallèles, on peut envoyer plusieurs impulsions lumineuses 316a, 316b, 316c, 316d simultanées, destinées chacune à un échantillon, situé dans une cavité cible du système multi-cavités.

Pour émettre plusieurs impulsions lumineuses en simultané vers le système multi-cavités, on peut, par exemple utiliser une matrice de sources lasers 315 à la place d'un unique laser.

Des moyens de couplage peuvent être prévus pour coupler la matrice de lasers avec le système multicavités. Ces moyens de couplage prennent par exemple forme d'une matrice de lentilles 318. D'autres moyens de couplage peuvent être prévus pour coupler la le système multicavités avec la matrice de détecteurs 320. Ces autres moyens de couplage prennent par exemple forme d'une autre matrice de lentilles 323 (figure 4B).

Selon une variante, pour émettre plusieurs impulsions lumineuses en simultané vers le système multi-cavités, on peut, par exemple utiliser un laser 215 relié à des moyens de couplage différents de ceux précédemment décrits prenant, par exemple la forme de plusieurs fibres optiques 328 permettant d'acheminer les impulsions lumineuses provenant du laser vers le système multi-cavités.

L'invention n'est pas limitée au type de mesure précédemment décrit, basé sur le temps de vie de photons dans une cavité résonante. Des variantes de méthode de mesure peuvent être prévues à l'aide de cette cavité résonante tout en restant dans le cadre de l'invention.

L'invention peut être appliquée à des mesures très fines et permettre par exemple de mesurer l'hybridation de brins d'ADN ou d'ARN. En effet, l'hybridation d'échantillons d'ADN ou d'ARN peut être quantifiée en mesurant l'absorption lumineuse de ces échantillons.

Pour effectuer de telles mesures les échantillons d'ADN ou d'ARN peuvent être par exemple greffés sur des plots d'une biopuce placée ensuite dans un système multi-cavités. On peut alors suivre une méthode de mesure telle que celles précédemment décrites. On envoie par exemple des impulsions lumineuses vers un échantillon se trouvant dans une cavité particulière du système de plusieurs cavités, puis on effectue une mesure du signal en sortie de cette cavité.

La biopuce peut par exemple comprendre une matrice par exemple de 50*50 plots, chacun de diamètre pouvant aller par exemple de 1 µm ou de quelques micromètres à 100 µm ou quelques centaines de micromètres par exemple 300 µm. Le nombre de plots n'est pas limité. Selon un autre exemple, la biopuce peut comprendre une matrice de 5000*5000 plots, chacun de diamètre pouvant aller par exemple de 1 µm à 10 µm.

Quant aux cavités du système multi-cavités, ces dernières peuvent avoir une longueur par exemple comprise entre 1 cm ou quelques centimètres et 2 mètres ou plusieurs mètres. Un cavité mise en oeuvre suivant l'invention peut avoir par exemple une longueur de l'ordre de 10 cm.

Il est possible, d'effectuer une mesure directe de l'absorption lumineuse des brins d'ADN ou d'ARN, sans que ces derniers soient marqués.

Dans ce cas, la ou les sources émettrices d'impulsions utilisées émettront par exemple dans le domaine ultraviolet. Ces sources peuvent comprendre par un ou plusieurs lasers pulsés émettant à une longueur d'onde par exemple d'environ 250 nm.

Selon une autre variante, on peut effectuer une mesure d'absorption ou de diffusion lumineuse de brins d'ADN ou d'ARN marqués préalablement. Les marqueurs utilisés peuvent être par exemple des marqueurs chimiques comme des fluorophores de type Cy3.

On peut également effectuer la mesure d'absorption ou/et de diffusion lumineuse à l'aide d'un marquage des échantillons par des particules. Dans le cas d'une mesure d'absorption, ces particules peuvent être des nanobilles par exemple à base d'or et de diamètre compris par exemple entre 1 nm et 10 nm. Pour une mesure de diffusion, des nanobilles plus grosses, par exemple à base d'or et de diamètre compris par exemple entre 20 nm et 100 nm ou plusieurs centaines de nanomètres peuvent être utilisées.

Lorsque des fluorophores par exemple du type Cy3, sont exposés sous un fort flux lumineux ou sous un flux lumineux continu, ces derniers peuvent avoir tendance à blanchir. Quand apparaît ce phénomène que l'on appellera « photo-blanchiment », les échantillons n'absorbent alors pratiquement plus de lumière et toute mesure d'absorption lumineuse devient très imprécise.

La méthode de mesure suivant l'invention présente l'avantage de pouvoir exposer les échantillons sous des rayonnements lumineux de très courte durée, par exemple de l'ordre de la centaine de nanosecondes pour une cavité de longueur 10 cm et des miroirs de coefficient de réflectivité 99,8 %. Avec le procédé de mesure suivant l'invention, Dans le cas où l'on mesure des brins d'ADN ou d'ARN marqués par des fluorophores, ces brins ne subissent pas ou très peu le phénomène de « photo-blanchiment ».

Dans le cas où l'on mesure des brins marqués, la source émettrice d'impulsions lumineuses, émettra par exemple dans le domaine du visible ou de l'infrarouge et peut prendre la forme d'un ou plusieurs lasers pulsés, par exemple des lasers de type YAG, éventuellement doublés et émettant à une longueur d'onde de l'ordre de 532 nm ou des lasers de type He-Ne, émettant à une longueur d'onde de l'ordre de 541 nm.

Selon une variante du procédé suivant l'invention illustrée en figure 3D et décrite précédemment, un des moyens réflecteurs du système multi-cavités peut servir directement de support aux échantillons biologiques dont on souhaite mesurer l'absorption. Dans le cadre de la mesure d'hybridation de brins d'ADN ou d'ARN, ces brins peuvent être par exemple greffés sur des plots directement intégrés ou accolés sur un miroir, par exemple de type miroir de Bragg à haute réflectivité, ou sur des miroirs d'une matrice de miroirs.

Un exemple de procédé de réalisation en couches minces d'une matrice de miroirs concaves, va être à présent décrit.

La matrice est formée tout d'abord, à partir d'un substrat 400 à base d'un matériau, tel que par exemple de la silice fondue, ou du verre, par exemple de type BK7.

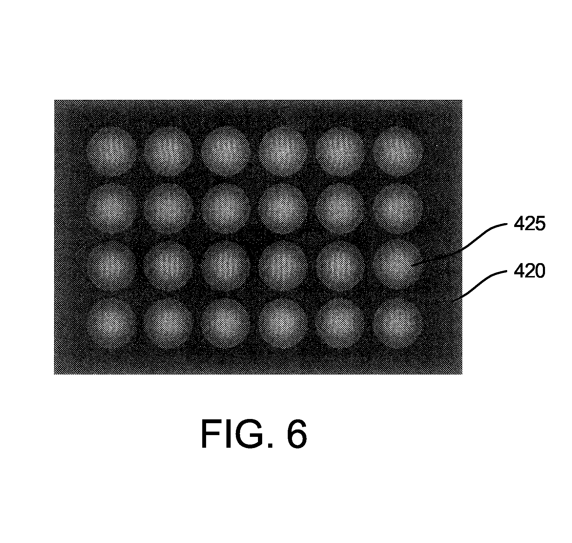

Ensuite, un dépôt d'une couche de résine 410 photosensible est réalisé sur ledit substrat, par exemple par une technique de « spin-coating » (en français dépôt tournant ou dépôt effectué à la tournette). Puis, on insole la couche de résine photosensible 410, par exemple sous une source de rayonnement incohérent ultraviolet, à travers un masque à transmission variable tel que celui illustré à la figure 6. Ce masque comporte des parties opaques 420 au rayonnement ultraviolet et des motifs 425 ronds agencés selon une matrice. Ces motifs 425 sont des reproductions de motifs des miroirs que l'on souhaite former dans le substrat. Les motifs 425 du masque ont une transparence qui varie de la périphérie vers le centre.

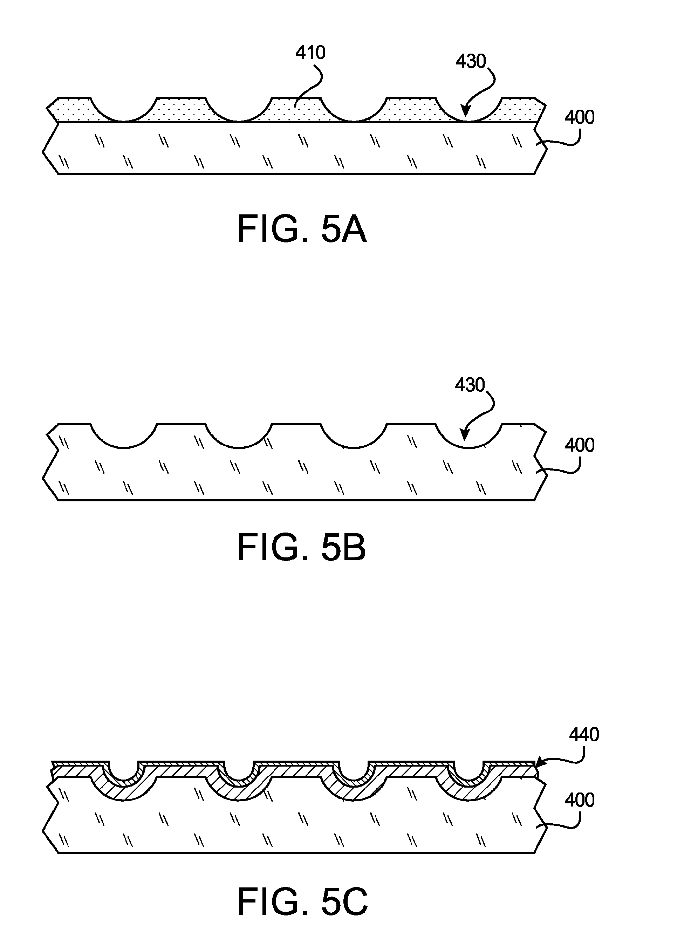

L'exposition de la couche de résine 410, à travers le masque à transmission variable, permet de modifier les propriétés physico-chimiques de la résine en fonction de l'éclairement reçu. En développant la résine, on obtient, dans le cas par exemple d'une résine à tonalité positive, des trous 430 en forme de demi-sphère (figure 5A) .

Puis, on réalise une gravure du substrat 400, à travers les trous 430, afin de reproduire ces derniers et former une matrice de trous dans le substrat 400. Ces trous peuvent avoir un diamètre de l'ordre de quelques micromètres à quelques centimètres (figure 5B). Ensuite, on réalise plusieurs dépôts conformes sur le substrat gravé, afin de former un empilement multi-couches réfléchissant (figure 5C).

Cet empilement multi-couches est formé d'une alternance de couches d'indice de réfraction faible à base de matériaux tels que par exemple : SiO₂, MgF₂, MgF₂, LiF, et de couches d'indices de réfraction élevé (tels que par exemple : TiO₂, HfO₂, Si₃N₄, Ta₂O₅, Al₂O₃, In₂O₃. Cet empilement peut permettre de réaliser des miroirs à haute réflectivité, par exemple de type miroir de Bragg. Il peut être formé par exemple par des dépôts successifs de type dépôt physique en phase vapeur (PVD pour « Physical Vapor Déposition »), ou de type dépôt chimique en phase vapeur (CVD pour « Chemical Vapor Déposition).

### Documents cités :

[1] : « Thermo-optical spectroscopy : détection by the "mirage effect" »; A.C. Boccara, D.Fournier, J.Badoz; Science; Nov 1979.
[2] : « Surface plasmon resonnance sensors » ; Jiri Homola, Siclair S.Yee, Gunter Gautlitz, Sensor and Actuators 54 ; 1999.

## Revendications

1. Dispositif de mesure d'absorption ou de diffusion lumineuse d'échantillons comprenant : des premiers moyens réflecteurs et des seconds moyens réflecteurs de rayons lumineux, et dans lequel les premiers moyens réflecteurs ou/et les seconds moyens réflecteurs sont dotés d'au moins deux miroirs ou d'une matrice de miroirs intégrés à un même support, les premiers et seconds moyens réflecteurs étant aptes à former un système de plusieurs cavités résonantes.

2. Dispositif selon la revendication 1, dans lequel les premiers moyens réflecteurs comprennent une première matrice (207) de miroirs (208) concaves, les seconds moyens réflecteurs comprenant un miroir plan (209) ou une seconde matrice (210) de miroirs (211) concaves.

3. Dispositif selon l'une des revendications 1 ou 2, comprenant en outre un dispositif émetteur d'impulsions lumineuses.

4. Dispositif selon la revendication 3, le dispositif émetteur d'impulsions lumineuses comprenant un ou plusieurs lasers pulsés (215), ou une matrice de lasers (315) pulsés.

5. Dispositif selon l'une des revendications 1 à 4, comprenant en outre : des moyens de couplage entre ledit dispositif émetteur et au moins une cavité du système de plusieurs cavités.

6. Dispositif selon la revendication 5, les moyens de couplage comprenant un ou plusieurs guides d'ondes, ou au moins une lentille, ou au moins une matrice de lentilles.

7. Dispositif selon l'une des revendications 3 à 6, comprenant en outre : des moyens de déflexion (217) de rayons lumineux issus dudit dispositif émetteur d'impulsions lumineuses.

8. Dispositif selon la revendication 7, les moyens de déflexion comprenant un générateur radiofréquence.

9. Dispositif selon l'une des revendications 1 à 8, comprenant en outre un dispositif de détection, permettant de détecter des signaux lumineux en sortie de la cavité résonante.

10. Dispositif selon la revendication 9, ledit dispositif de détection comprenant au moins une photodiode ou au moins une matrice de photodiodes.

11. Dispositif selon l'une des revendications 9 ou 10, comprenant en outre d'autres moyens de couplage pour focaliser des rayons lumineux provenant d'une ou plusieurs cavités du système de plusieurs cavités sur le dispositif de détection.

12. Dispositif selon l'une des revendications 1 à 11, le dispositif comprenant en outre : un support (200) pour les échantillons, placé entre les premiers moyens réflecteurs et les seconds moyens réflecteurs.

13. Dispositif selon l'une des revendications 1 à 11, dans lequel les échantillons sont à base d'éléments biologiques, les échantillons étant greffés ou intégrés sur les premiers moyens réflecteurs ou sur les seconds moyens réflecteurs.

14. Procédé de mesure d'absorption ou de diffusion lumineuse d'échantillons biologiques comprenant les étapes consistant à :
a) placer au moins un échantillon cible dans au moins une cavité résonante,
b) émettre au moins une impulsion lumineuse dans ladite cavité,
c) mesurer au moins un signal lumineux de réponse sortant de la cavité en réponse à ladite impulsion lumineuse, la mesure dudit signal lumineux permettant de déterminer l'absorption lumineuse dudit échantillon.

15. Procédé de mesure d'absorption d'échantillons biologiques selon la revendication 14, la cavité résonante appartenant à un système de plusieurs cavités comprenant au moins deux miroirs ou au moins une matrice de miroirs intégrés à un même support.

16. Procédé selon la revendication 15, le système de plusieurs cavités étant formé par au moins une matrice (207) de miroirs (208) concaves, associée à un miroir plan (209) ou une autre matrice (210) de miroirs (211) concaves.

17. Procédé selon la revendication 15 ou 16, comprenant les étapes de :
a) placer au moins deux échantillons cibles parmi les échantillons biologiques chacun dans une cavité cible du système de plusieurs cavités,
b) émettre au moins une impulsion lumineuse dans chacune desdites cavités cibles.
c) mesurer au moins deux signaux lumineux de réponse sortant des cavités cibles en réponse auxdites impulsion lumineuses, les mesure desdits signaux lumineux permettant de déterminer l'absorption lumineuse desdits au moins deux échantillons.

18. Procédé selon la revendication 17, lesdites impulsions lumineuses étant émises simultanément.

19. Procédé selon la revendication 17 ou 18, lesdits signaux de réponse étant mesurés simultanément.

20. Procédé selon l'une des revendications 14 à 19, ladite impulsion ou lesdites impulsions lumineuses étant émises à l'aide d'un ou plusieurs lasers pulsés.

21. Procédé selon la revendication 20, les impulsions ayant une largeur temporelle comprise entre 100 picosecondes et 100 nanosecondes.

22. Procédé selon la revendication 20 ou 21, le laser pulsé ou les lasers pulsés étant associés à des moyens de déflexion d'impulsions lumineuses.

23. Procédé selon l'une des revendications 14 à 22, le signal de réponse ou lesdits signaux réponse étant mesurés, à l'étape c), à l'aide d'une ou plusieurs photodiodes.

24. Procédé selon l'une des revendications 14 à 23, l'échantillon ou les échantillons étant disposés sur un support (200) placé dans la cavité résonante.

25. Procédé selon l'une des revendications 14 à 24, l'échantillon ou les échantillons étant disposés sur une biopuce.

26. Procédé selon l'une des revendications 14 à 25, chaque échantillon étant déplacé dans la cavité résonante.

27. Procédé selon l'une des revendications 14 à 26, dans lequel la cavité ou le système de plusieurs cavité est formé par des premiers moyens réflecteurs et des seconds moyens réflecteurs, ledit échantillon ou lesdits échantillons biologiques étant greffés ou intégrés auxdits premiers moyens réflecteurs ou auxdits seconds moyens réflecteurs.

28. Procédé selon l'une des revendications 14 à 27, ledit échantillon ou lesdits échantillons biologiques comprenant de l'ADN ou de l'ARN.
